Europäisches Patentamt

European Patent Office

Office européen des brevets

(19)

(11) EP 0 792 051 A2

(12) **EUROPÄISCHE PATENTANMELDUNG**

(43) Veröffentlichungstag:
27.08.1997 Patentblatt 1997/35

(51) Int Cl.⁶: **H04L 25/03**

(21) Anmeldenummer: 97810082.4

(22) Anmeldetag: 20.02.1997

(84) Benannte Vertragsstaaten:
**CH DE FR GB IT LI NL SE**

(30) Priorität: 23.02.1996 CH 477/96

(71) Anmelder: **ASCOM TECH AG**
**CH-3018 Bern (CH)**

(72) Erfinder: **Fleischmamm, Michael**
**5600 Lenzburg (CH)**

(74) Vertreter:
**Roshardt, Werner Alfred, Dipl.-Phys. et al**
**Keller & Partner**
**Patentanwälte AG**
**Marktgasse 31**
**Postfach**
**3000 Bern 7 (CH)**

(54) **Verfahren für die kohärente Demodulation eines Empfangssignals**

(57)     Bei einem Verfahren für die kohärente Demodulation eines Empfangssignals werden vorab mehrere Koeffizienten $(f_0,...,f_6)$ einer Kanalstossantwort ermittelt. Die Koeffizienten werden aufgeteilt in mindestens zwei Gain-Taps $(f_0,f_1,f_2)$ und mindestens ein Loss-Tap $(f_3,...,f_6)$. Die Loss-Taps werden für ein Feed-back Filter (2) verwendet, um eine entsprechende Signalkomponente zu eliminieren. Das auf diese Weise bereinigte Signal wird in einem Log-Likelihood-Equalizer (3) auf der Basis der Gain-Taps geschätzt. Das Verfahren zeichnet sich dadurch aus, dass weder ein Filtertraining noch ein hoher Rechenaufwand zur Ermittlung der Equalizer-Koeffizienten erforderlich sind. Ferner gibt es keinen Error floor für hohe Signal: Rauschverhältnisse. Die in der Detektionsphase erforderliche Anzahl der Operationen pro Symbol ist verhältnismässig klein.

Fig.1

## Beschreibung

### Technisches Gebiet

Die Erfindung betrifft ein Verfahren für die kohärente Demodulation eines Empfangssignals, bei welchem vorab mehrere Koeffizienten einer Kanalstossantwort ermittelt werden. Weiter betrifft die Erfindung eine Schaltungsanordnung zur Durchführung des Verfahrens.

### Stand der Technik

Für neue Anwendungen der drahtlosen Kommunikation müssen zusehends höhere Frequenzbänder gewählt werden. So sind z.B. für die Indoor-Datenkommunikation Trägerfrequenzen von 5 Gigaherz vorgesehen (HIPERLAN-Standard). Aufgrund der Mehrwegausbreitung (Multi-path propagation) ist eine empfängerseitige Signalentzerrung unumgänglich. Bei einer Symboldauer von z.B. T = 42.5 ns (HIPERLAN) und einem typischen Delay Spread DS = 150 ns kann sich die Kanalstossantwort über mehrere Symbolintervalle erstrecken. Das kann zu schwerwiegender Intersymbolinterferenz (ISI) beim Empfang des Signals führen, was entsprechend leistungsfähige Entzerrung erfordert. Bei Verwendung der GMSK-Modulation mit einem Zeit-Bandbreitenprodukt BT = 0.3 (z.B. in HIPERLAN) wird zusätzliche Intersymbolinterferenz eingeführt aufgrund des Partial Response Signallings.

Bei einer Datenrate 1/T = 23.5 Mbit/s ist eine optimale MLSE-Entzerrung (Viterbi-Algorithmus) nicht möglich wegen der hohen Komplexität (Anzahl Rechenoperationen pro Sekunde, Leistungsbedarf).

Bekannt ist natürlich auch die DFE-Struktur (DFE = Decision Feedback Equalizer; vgl. z.B. J. G. Proakis, Digital Communications, McGraw-Hill Book Company 1989, 2nd Edition, pp.593 ff). Allerdings ergibt sich bei dieser das Problem des Error Floor, so dass die Performance bei höheren Signal:Rausch-Verhältnissen begrenzt ist.

### Darstellung der Erfindung

Aufgabe der Erfindung ist es, ein Verfahren der eingangs genannten Art anzugeben, das sich für die Datenübertragung im Indoor-Bereich eignet, wobei eine gute Entzerrung bei geringer Komplexität des Empfängers angestrebt wird.

Gemäss der Erfindung besteht die Lösung darin, dass mindestens zwei Koeffizienten als Gain-Taps in einem Log-Likelihood Equalizer und mindestens ein Koeffizient als Loss-Tap in einem Feed-back Filter verwendet werden.

Ein wesentlicher Vorteil des erfindungsgemässen Verfahrens besteht auch darin, dass selbst bei hohem SNR kein sog. Error floor auftritt. Das heisst, die Performance kann stets durch eine Reduktion des Rauschens verbessert werden. Weiter ist darauf hinzuweisen, dass bei der Erfindung kein Filtertraining nötig ist, um die Equalizer-Koeffizienten in der Initialisierungsphase zu bestimmen. Im übrigen ist die Zahl der Rechen-Operationen pro detektiertem Symbol ziemlich klein.

Die Erfindung macht sich die Tatsache zunutze, dass bei einer Kanalstossantwort mit mehreren Taps die Energie ungleichmässig verteilt ist. Häufig werden z.B. die ersten zwei bis drei Taps viel stärker sein als die restlichen. Im Sinn der Erfindung werden zur Extraktion der Nutzinformation aus dem Empfangssignal nur die sog. Gain-Taps verwendet. Die Loss-Taps (Nachläufer) werden als Störung klassiert und durch das Feed-back Filter eliminiert, ohne dass der - auch in den Nachläufern enthaltene - Anteil der Nutzinformation verwendet wird. Das Feed-back Filter stellt eine Rückführung der bereits geschätzten Symbole dar. In Abwesenheit von Entscheidungsfehlern kann der Einfluss der Loss-Taps mit dem Feed-back Filter vollständig eliminiert werden.

Die Schätzung der Koeffizienten der Kanalstossantwort kann in an sich bekannter Weise erfolgen (z.B. durch Auswerten einer im voraus bekannten Trainingssequenz, welche in jedem Burst enthalten ist - gedacht ist an den HIPERLAN-Standard). Bei einer Burst-Übertragung kann die Kanalschätzung für jeden Burst erneut durchgeführt werden. Entsprechend sind die Koeffizienten und die davon abhängigen Grössen im Feed-back Filter bzw. im Log-Likelihood Equalizer neu zu berechnen.

Im Log-Likelihood Equalizer werden das bereinigte Empfangssignal und die bereits geschätzten Symbole in zwei oder mehr getrennten Pfaden kombiniert. Dann werden L-Werte $L_i$ (Wahrscheinlichkeitswerte) gebildet (Soft-decision). Die L-Werte werden zusammengefasst (addiert) und einem Entscheider zugeführt, welcher auf der Basis einer Hard-decision das aktuelle Symbol schätzt.

Im allgemeinen kann die zur Durchführung der Erfindung erforderliche Rechenarbeit in eine Initialisierungs- und eine Detektionsphase aufgeteilt werden. In der Initialisierungsphase werden all jene Rechenarbeiten durchgeführt, die für die Datendetektion in einem Burst nur einmal durchgeführt werden müssen. In der Detektionsphase werden die eigentlichen Nutzdaten (Symbolschätzwerte) ermittelt.

Gemäss einer bevorzugten Ausführungsform wird in der Initialisierungsphase eine aktuelle Signalkonstellation $\{x^+_{k,i}, x^-_{k,i}\}$ gemäss Gleichungen II und III ermittelt, um die L-Werte $L_i$ auf der Basis einer Abstandsfunktion zwischen Empfangssignal und Signalkonstellation zu bestimmen. Die Abstandsfunktion kann je nach gewünschter Bitfehlerrate und vorhandener Rechenleistung unterschiedlich formuliert sein. Gemäss einer ersten Ausführungsvariante werden in der Initialisierungsphase Gewichtungswerte $w_i$ gemäss Gleichung IV bestimmt. Die L-Werte $L_i$ werden in der Detektionsphase - auf der Basis eines besonders einfachen Modells der Abstandsfunktion - gemäss Gleichung V berechnet.

Gemäss einer zweiten, rechnerisch aufwendigeren Ausführungsform wird in der Initialisierungsphase eine Tabelle gemäss Gleichungen VI und VII ermittelt, welche in der Detektionsphase die Bestimmung der Werte $L_i$ gemäss Gleichungen VIII, IX und X ermöglicht. Es ist zu beachten, dass der rechnerische Aufwand während der Detektionsphase relativ klein ist. Nur die Initialisierungsphase wird etwas aufwendiger.

Um eine noch bessere Performance zu erreichen, können - gemäss einer dritten Ausführungsform - in der Detektionsphase die Werte $L_i$ gemäss Gleichung XI bis XIV bestimmt werden.

Bei der vierten Ausführungsform ist die Abstandsfunktion so festgelegt, dass eine minimale euklidische Distanz zwischen Empfangssignal und aktueller Signalkonstellation in der komplexen Ebene bestimmt wird. Diese Ausführungsform ist zweifellos die rechnerisch aufwendigste und performancemässig beste der soeben aufgezählten Varianten (Weisungen XV - XVII).

Der Rechenaufwand hängt nicht nur von der gewählten Abstandsfunktion, sondern auch von der Anzahl Gain-Taps ab. Typischerweise wird mit 2-5 Gain-Taps gearbeitet. Die Anzahl der Loss-Taps hat keinen grossen Einfluss auf den Rechenaufwand. Die Loss-Taps können direkt als Koeffizienten für das Feed-back Filter benutzt werden.

Wenn die führenden Kanal-Koeffizienten (Leading Taps) klein sind (z.B. kleiner als der grösste Koeffizient der Nachläufer, d.h. der Loss-Taps), dann kann das optimale Beobachtungsfenster (Gain-Tap-Window) zu höheren Indices hin (also nach hinten) verschoben werden. Vorzugsweise wird zur Festlegung des Beobachtungsfensters die Summe der Augenöffnungen berechnet und bezüglich aller möglichen Positionen des Beobachtungsfensters maximiert.

Die Erfindung eignet sich insbesondere für die Datenkommunikation nach dem HIPERLAN-Standard. Eine das erfindungsgemässe Verfahren implementierende Schaltungsanordnung verfügt über ein Feed-back Filter, um Signalkomponenten, die durch die Loss-Taps erzeugt sind, aus dem Empfangssignal zu eliminieren, und über einen Log-Likelihood Equalizer, um die Daten (Symbole) auf der Basis der Gain-Taps zu schätzen. Insbesondere die rechnerisch einfache erstgenannte Ausführungsform kann sehr gut mit einem ASIC implementiert werden. Die ganze Schaltungsanordnung ist z.B. in einem Steckmodul für einen Personal Computer, einen Lap-top o.dgl. integriert.

Weitere vorteilhafte Ausführungsbeispiele und Merkmalskombinationen ergeben sich aus der nachfolgenden Detailbeschreibung.

## Kurze Beschreibung der Zeichnungen

Die zur Erläuterung der Ausführungsbeispiele verwendeten Zeichnungen zeigen:

Fig. 1    Ein Blockschaltbild eines erfindungsgemässen kohärenten Demodulators;

Fig. 2    ein Beispiel einer möglichen Energieverteilung auf die verschiedenen Koeffizienten der Kanalstossantwort;

Fig. 3    eine grafische Darstellung von Simulationsresultaten von vier bevorzugten Ausführungsformen;

Fig. 4    ein Blockschaltbild einer besonders bevorzugten Ausführungsform.

## Wege zur Ausführung der Erfindung

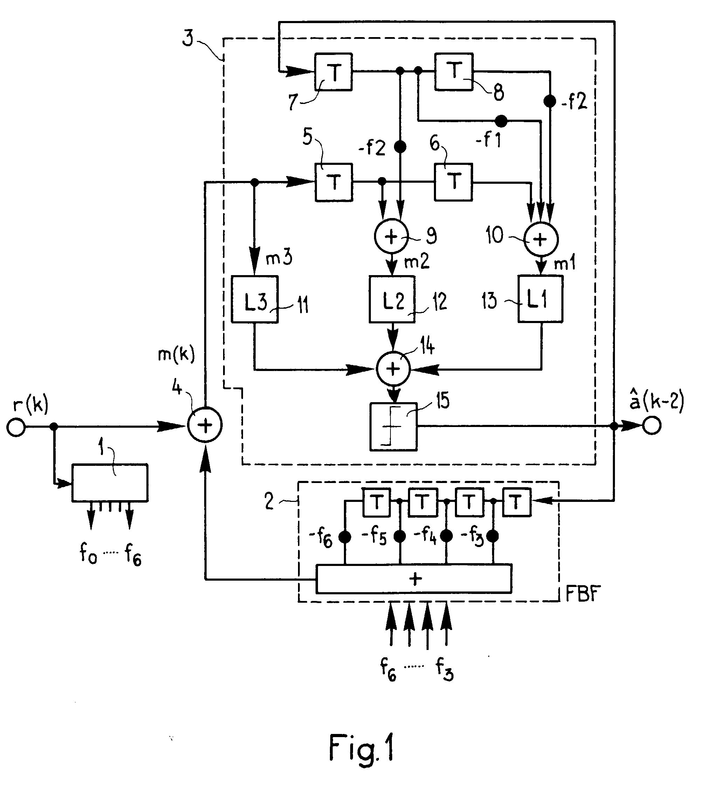

Fig. 1 zeigt grob die Struktur des Empfängers in der aequivalenten Basisbanddarstellung. r(k) stellt das komplexe Empfangssignal dar (nach dem Heruntermischen aus dem - z.B. im Gigaherzbereich angesiedelten - Frequenzband). Mit einem Kanalschätzer 1 werden nach irgendeinem geeigneten Verfahren die z.B. sieben komplexe Koeffizienten $f_0$ bis $f_6$ der Kanalstossantwort ermittelt. Diese sieben Koeffizienten $f_0$ bis $f_6$ werden z.B. in drei Gain-Taps $f_0$ bis $f_2$ und vier Loss-Taps $f_3$ bis $f_6$ aufgeteilt.

Die Loss-Taps $f_3$ bis $f_6$ werden als Koeffizienten in einem Feed-back Filter 2 verwendet. Die Gain-Taps $f_0$ bis $f_2$ werden zur Ermittlung der Symbolschätzwerte im Log-Likelihood Equalizer 3, kurz LLE, benutzt.

Das Empfangssignal r(k) wird mit einem über das Feed-back Filter 2 zurückgeführten Schätzwertsignal kombiniert (Addierer 4) und als bereinigtes Empfangssignal m(k) dem LLE 3 zugeführt.

Im LLE 3 erfolgt eine Aufteilung auf drei Verarbeitungspfade. Im ersten wird ein Wert L3 (in noch zu erläuternder Weise) direkt aus m(k) errechnet (vgl. Formel Ia).

In einem zweiten Pfad wird zunächst eine Verzögerung (Verzögerungselement 5) um eine Symboldauer T eingeführt und dann eine Summe (Addierer 9) mit dem zuletzt geschätzten und mit dem Koeffizienten $-f_2$ gewichteten Symbolschätzwert $\hat{a}(k-3)$ kombiniert (vgl. Formel Ib).

Für den dritten Pfad wird das bereinigte Empfangssignal m(k) ein zweites Mal um eine Symboldauer T verzögert (Verzögerungselement 6) und mit den entsprechend verzögerten (7, 8) und mit den Koeffizienten $-f_1$ resp. $-f_2$ gewichteten Symbolschätzwerten â(k-3) und â(k-4) im Sinn der Formel Ic kombiniert (Addierer 10).

Die drei Pfade werden ausgangsseitig der L-Wert-Rechner 11, 12, 13 mit einem Addierer 14 kombiniert. Danach bestimmt ein Entscheider 15 den Symbolschätzwert â(k-2) im Sinn einer Hard-decision.

Im folgenden werden anhand der binären Modulation die vier bevorzugten Varianten zur Bestimmung der L-Werte erläutert. Bei allen vier Varianten ist als erstes in der Initialisierungsphase die Signalkonstellation gemäss Formel II zu ermitteln. Für i = 3 beispielsweise ergibt sich:

$$x^+_{1,1} = +f_0 \qquad x^-_{1,1} = -f_0$$

$$x^+_{1,2} = +f_1 +f_0 \qquad x^-_{1,2} = -f_1 +f_0$$

$$x^+_{2,2} = +f_1 -f_0 \qquad x^-_{2,2} = -f_1 -f_0$$

$$x^+_{1,3} = +f_2 +f_2 +f_0 \qquad x^-_{1,3} = -f_2 +f_1 +f_0$$

$$x^+_{2,3} = +f_2 +f_1 -f_0 \qquad x^-_{2,3} = -f_2 +f_1 -f_0$$

$$x^+_{3,3} = +f_2 -f_1 +f_0 \qquad x^-_{3,3} = -f_2 -f_1 +f_0$$

$$x^+_{4,3} = +f_2 -f_1 -f_0 \qquad x^-_{4,3} = -f_2 -f_1 -f_0$$

Bei der besonders bevorzugten ersten Ausführungsform werden in der Initialisierungsphase zudem Gewichtungsfaktoren $w_i$ gemäss Formel IV bestimmt. $Arg(f_{i-1})$ stellt das Argument des komplexwertigen Koeffizienten $f_{i-1}$ dar. $rx^+_{k,i}$ steht für den Realwert der komplexwertigen Grösse $x^+_{k,i}$. In der Initialisierungsphase wird also der Signalpunkt mit dem geringsten Absolutwert gesucht und phasenmässig gedreht.

Während der Detektionsphase werden die Werte $L_i$ gemäss Formel V bestimmt. Im Prinzip wird bei dieser Variante der schlimmste Fall angenommen. Das heisst, das Ergebnis ist dann identisch mit einer optimalen Berechnung, wenn der Signalpunkt $rx^+_{k,i}$ oder $rx^-_{k,i}$ mit dem kleinsten Absolutwert auftritt. In allen anderen Fällen ist der Wert $L_i$ zu pessimistisch.

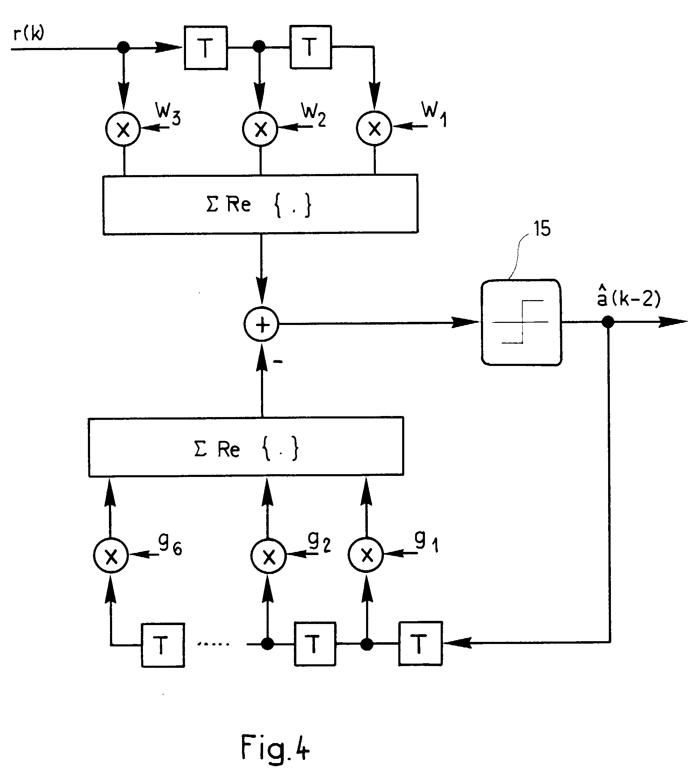

Bei der soeben beschriebenen Ausführungsform vereinfacht sich das allgemeine Blockschaltbild gemäss Fig. 1 zu demjenigen gemäss Fig. 4. Wie der Fachmann leicht erkennt, sieht diese Struktur wie diejenige eines DFE aus. Der wesentliche Unterschied besteht jedoch darin, wie die Koeffizienten berechnet werden. Diesbezüglich unterscheidet sich die Erfindung klar vom bekannten DFE-Empfänger. Nebenbei sei folgendes erwähnt: Während die erfindungsgemässen Koeffizienten gelegentlich durchaus auch Null sein können, ist dies bei den bekannten DFE-Koeffizienten nie der Fall.

Im Fall der binären Modulation beispielsweise berechnen sich die Feedback-Filter-koeffizienten $g_1$, $g_2$, $g_3$, $g_4$, $g_5$, $g_6$ wie folgt:

$$g_1 = f_3 {}^*w_3 + f_2 {}^*w_2 + f_1 {}^*w_1$$

$$g_2 = f_4 {}^*w_3 + f_3 {}^*w_2 + f_2 {}^*w_1$$

$$g_3 = f_5 {}^*w_3 + f_4 {}^*w_2 + f_3 {}^*w_1$$

$$g_4 = f_6 {}^*w_3 + f_5 {}^*w_2 + f_4 {}^*w_1$$

$$g_5 = \qquad f_6 {}^*w_2 + f_5 {}^*w_1$$

$$g_6 = \qquad f_6 {}^*w_1$$

Die Werte L1, L2 und L3 entsprechen in diesem einfachen Fall den Produkten $r(k)*w_3$, $r(k-1)*w_2$ bzw. $r(k-2)*w_1$ (Feedforward-Filter).

Die zweite bevorzugte Ausführungsform beruht darauf, dass in der Initialisierungsphase eine Tabelle errechnet wird, die in der Detektionsphase nur noch ausgelesen werden muss. Der etwas erhöhte Rechenaufwand in der Initialisierungsphase zahlt sich durch eine Verbesserung der Performance aus. Die in der Initialisierungsphase zu berechnenden Werte der Tabelle $TAB_{PDF,i}(x)$ werden nach den Formeln VI und VII errechnet. $ramsp_i$ bezeichnet die (im voraus festzulegende) Grösse der i-ten Tabelle.

In der Detektionsphase werden dann die reellwertige Grösse $rm_i$, die Adresse adr und die Werte $L_i$ gemäss den Formeln VIII bis X bestimmt. Im wesentlichen wird also eine Rückwärtsrotation und eine Adressenberechnung für die abgespeicherte Tabelle (lookup table) durchgeführt.

Bei den nachfolgend beschriebenen beiden Ausführungsformen kann zwar die Performance gegenüber den bisherigen Ausführungsformen verbessert werden. Allerdings wird die Detektionsphase beträchtlich aufwendiger, weil Minima zu suchen sind.

Bei der dritten Ausführungsform beschränkt sich die Initialisierungsphase auf die Bestimmung der Signalkonstellation gemäss den Formeln II und III. Die Detektionsphase erfordert dagegen die Auswertung der Formeln XI bis XIV.

Die vierte bevorzugte Ausführungsform ist von der Performance her gesehen am nächsten beim Optimum, rechnerisch aber sehr aufwendig. Im Unterschied zur dritten Ausführungsform arbeitet die vierte Ausführungsform in der komplexen Entscheidungsebene. Das heisst, es sind minimale Distanzen (euklidische Abstände) in der komplexen Ebene zu bestimmen. In der Initialisierungsphase wird die komplexwertige Signalkonstellation gemäss Formel II bestimmt. Pro Symbolintervall sind dann in der Detektionsphase die Werte $L_i$ gemäss den Formeln XV bis XVII zu bestimmen.

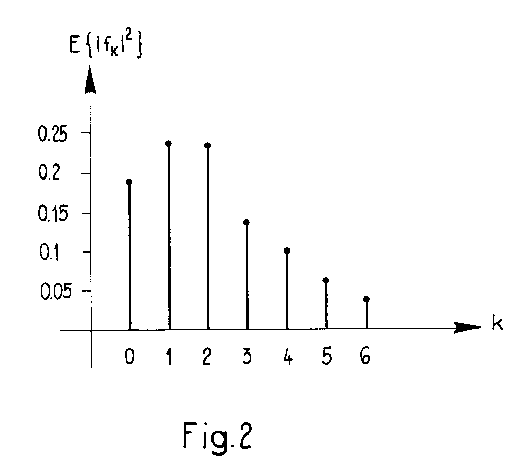

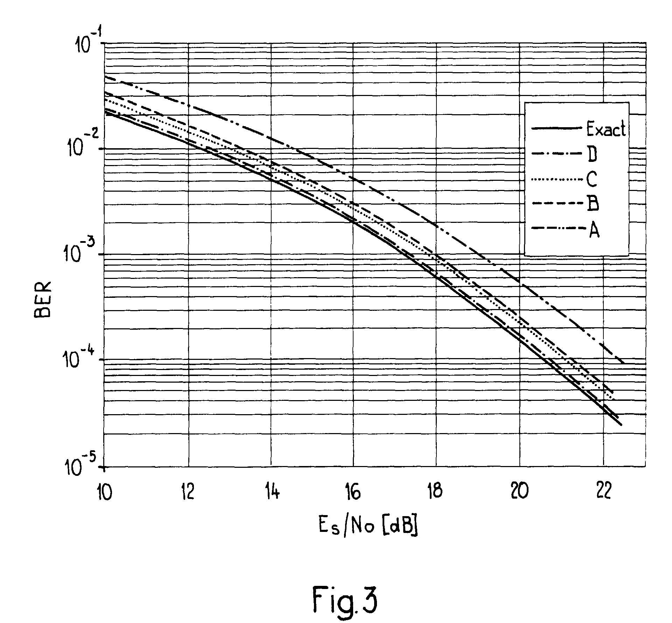

Anhand der Fig. 3 soll die Performance der verschiedenen Ausführungsbeispiele im Vergleich gezeigt werden. Die Simulationen sind auf der Basis einer BPSK-Signalisierung und einem Datenburst mit 10 Blöcken mit je einer Blocklänge von 496 Bit durchgeführt. Es wurde ein Rayleigh-Fading-Kanal mit sieben Koeffizienten (Taps) im Abstand T zugrundegelegt. Die Kanalkoeffizienten werden als zeitinvariant innerhalb eines Datenbursts, aber als statistisch unabhängig von einem Burst zum anderen, angenommen. Es wurde eine mittlere Leistung pro Tap gemäss Fig. 2 angenommen.

Auf der Abszisse ist das Signal:Rausch-Verhältnis und auf der Ordinale die Bitfehlerrate (BER = Bit Error Rate) aufgetragen. Wie aus der Figur ersichtlich ist, hat das vierte Ausführungsbeispiel D nahezu dieselbe Performance wie die optimale LLE-Empfängerstruktur (Exact). Die Performance nimmt um durchschnittlich 0.5 dB ab, wenn gemäss der dritten Ausführungsform C nicht in der komplexen Ebene, sondern auf der reellen Achse gearbeitet wird. Performancemässig liegen die zweite und dritte Ausführungsform (Kurve B bzw. C) sehr nahe beieinander. Eine weitere Abnahme um etwas 1.5 dB ist bei der rechnerisch besonders einfachen ersten Ausführungsform in Kauf zu nehmen (Kurve A). Trotzdem hat auch diese Variante den Vorteil, dass die Bitfehlerrate mit zunehmendem Signal:Rausch-Verhältnis stetig weiter abnimmt und nicht abflacht. In der Simulation wurde bei der zweiten Ausführungsform eine Tabellengrösse $ramsp_i = 32$ gewählt.

In Fällen, in denen die führenden Taps der Kanalstossantwort klein sind (z.B. wegen einer Synchronisationsverzögerung), ist es von Vorteil, wenn die Gain-Taps "nach hinten" zu den leistungsstärkeren Kanal-Koeffizienten verschoben werden. Das heisst, dass z.B. das erste Tap der Kanalstossantwort nicht berücksichtigt wird und bis zu einem gewissen Grad Interferenz geduldet wird (vorausgesetzt, die Augenöffnung der verbleibenden Gain-Taps ist hinreichend gross). Gemäss einer bevorzugten Ausführungsform werden die I Gain-Taps so festgelegt, dass die Summe der quadrierten Augenöffnungen $eo_i$ maximal ist. Das zu suchende Optimum des Indexes pos ist mathematisch in Formel XVIII festgehalten. K+1 ist die Anzahl der bei der Kanalschätzung errechneten Taps bzw. Koeffizienten. Die Werte $eo_i$ sind in der Initialisierungsphase gemäss Formel XIX zu berechnen. Die Werte $rx^+_{k,i}$ und $rx^-_{j,i}$ ergeben sich beim Ermitteln der Signalkonstellation gemäss den Formeln II und III.

Bei der erstgenannten Ausführungsform entsteht kein wesentlicher Rechenaufwand, da gilt $eo_i = |w_i|$ für $1 \leq i \leq I$. Bei den übrigen Ausführungsformen sind zusätzliche Rechnungen erforderlich.

Selbstverständlich beschränkt sich die Erfindung nicht auf die beschriebenen vier Ausführungsformen. Es sind auch Abwandlungen zur Vereinfachung des Rechenaufwandes oder zur Verbesserung der Performance möglich.

Die erfindungsgemässe Empfängerstruktur ermöglicht eine gute Performance bei beschränkter Komplexität. Sie eignet sich dadurch für die Implementation in einem ASIC. Im Unterschied z.B. zu einem DFE (Decision Feed-back Equalizer) gibt es auch bei höheren Signal:Rausch-Verhältnissen keine Abflachung (Error floor) der Bitfehlerrate. Die Initialisierungsphase kommt ohne Training oder Matrixberechnungen aus. Auch in der Detektionsphase ist der Rechenaufwand verhältnismässig klein (im Vergleich beispielsweise zu einem DFE mit entsprechender Komplexität).

Formeln

$$(a)\ m_3 = m(k)$$

$$(b)\ m_2 = m(k - 1) - f_2 * \hat{a}(k - 3)$$

$$(c)\ m_1 = m(k - 2) - f_1 * \hat{a}(k - 3) - f_2 * \hat{a}(k - 4) \tag{I}$$

$$x_{k,i}^+ = +f_{i-1} \pm f_{i-2} \pm ... \pm f_0 \qquad 1 \le k \le 2^{i-1}$$

$$x_{k,i}^- = -f_{i-1} \pm f_{i-2} \pm ... \pm f_0 \qquad 1 \le k \le 2^{i-1} \tag{II}$$

$$rx_{k,i}^+ = real\{\exp(-j * arg(f_{i-1})) * x_{k,i}^+\}$$

$$rx_{k,i}^- = real\{\exp(-j * arg(f_{i-1})) * x_{k,i}^-\} \tag{III}$$

$$w_i = \min_k \left[rx_{k,i}^+\right] * \exp(-j * arg(f_{i-1})) \qquad for \qquad \min_k \left[rx_{k,i}^+\right] > 0$$
$$w_i = 0 \qquad else \tag{IV}$$

$$L_i = real\{m_i * w_i\} \tag{V}$$

$$\Delta_i = \frac{ramsp_i}{2 * \max_k \left[rx_{k,i}^+\right]} \tag{VI}$$

$$TAB_{PDF,i}(z) = \log \left( \frac{\sum_{k=1}^{2^{i-1}} \exp(\frac{-(z/\Delta_i - rx_{k,i}^+)^2}{2\sigma^2})}{\sum_{k=1}^{2^{i-1}} \exp(\frac{-(z/\Delta_i - rx_{k,i}^-)^2}{2\sigma^2})} \right) \tag{VII}$$

$$rm_i = real\{\exp(-j * arg(f_{i-1})) * m_i\} \tag{VIII}$$

$$adr = Integer(rm_i * \Delta_i) \tag{IX}$$

$$L_i = TAB_{PDF,i}(adr) \tag{X}$$

$$rm_i = real\{\exp(-j * arg(f_{i-1})) * m_i\} \tag{XI}$$

$$mindist_i^+ = \min_k[|rm_i - rx_{k,i}^+|] \tag{XII}$$

$$mindist_i^- = \min_k[|rm_i - rx_{k,i}^-|] \tag{XIII}$$

$$L_i = (mindist_i^-)^2 - (mindist_i^+)^2 \tag{XIV}$$

$$(mindist_i^+)^2 = \min_k[|m_i - x_{k,i}^+|^2] \tag{XV}$$

$$(mindist_i^-)^2 = \min_k[|m_i - x_{k,i}^-|^2] \tag{XVI}$$

$$L_i = (mindist_i^-)^2 - (mindist_i^+)^2 \tag{XVII}$$

$$\max_{pos}\left(\sum_{i=pos}^{I+pos-1}(eo_i)\right) \quad (0 \leq pos \leq K - I + 1) \tag{XVIII}$$

$$eo_i = 0.5 * \min_{k,j}[|rx_{k,i}^+ - rx_{j,i}^-|] \tag{XIX}$$

**Patentansprüche**

1. Verfahren für die kohärente Demodulation eines Empfangssignals, bei welchem vorab mehrere Koeffizienten ($f_i$) einer Kanalstossantwort ermittelt werden, dadurch gekennzeichnet, dass mindestens zwei Koeffizienten ($f_0$, $f_1$, $f_2$) als Gain-Taps in einem Log-Likelihood-Equalizer (3) und mindestens ein Koeffizient ($f_3$, $f_4$, $f_5$, $f_6$) als Loss-Tap in einem Feed-back Filter (2) verwendet werden.

2. Verfahren nach Anspruch 1, dadurch gekennzeichnet, dass das Empfangssignal durch Entscheidungsrückführung durch das Feed-back Filter (2) vom Einfluss der Loss-Taps bereinigt wird und dann in den Log-Likelihood-Equalizer (3) gegeben wird.

3. Verfahren nach Anspruch 2, dadurch gekennzeichnet, dass im Log-Likelihood Equalizer (3) das bereinigte Empfangssignal m(k) in mehreren getrennten Pfaden mit bereits vorhandenen Symbolschätzwerten kombiniert und dann je ein Wert $m_i$ ermittelt wird, bevor ein aktueller Symbolschätzwert durch eine Hard-decision bestimmt wird.

4. Verfahren nach einem der Ansprüche 1 bis 3, dadurch gekennzeichnet, dass in einer Initialisierungsphase eine aktuelle Signalkonstellation {$x_{k,i}^+$, $x_{k,i}^-$ bzw. $rx_{k,i}^+$, $rx_{k,i}^-$} ermittelt wird gemäss Gleichung II resp. III, um dann für jeden Pfad L-Werte $L_i$ auf der Basis einer Abstandsfunktion zwischen Empfangssignal und Signalkonstellation zu bestimmen.

5. Verfahren nach Anspruch 4, dadurch gekennzeichnet, dass in der Initialisierungsphase Gewichtungswerte $w_i$ gemäss Gleichung IV bestimmt und in einer Detektionsphase L-Werte $L_i$ gemäss Gleichung V ermittelt werden.

6. Verfahren nach Anspruch 4, dadurch gekennzeichnet, dass in der Initialisierungsphase eine Tabelle gemäss Formeln VI und VII ermittelt wird und in der Detektionsphase die L-Werte $L_i$ gemäss Formeln VIII bis X bestimmt werden.

7. Verfahren nach Anspruch 4, dadurch gekennzeichnet, dass in der Initialisierungsphase die Signalkonstellation gemäss Formel III ermittelt wird und in der Detektionsphase die L-Werte $L_i$ gemäss Formeln XI bis XIV bestimmt werden.

8. Verfahren nach Anspruch 4, dadurch gekennzeichnet, dass mit der Abstandsfunktion eine minimale euklydische Distanz zwischen Empfangssignal und aktueller Signalkonstellation bestimmt wird.

**9.** Verfahren nach einem der Ansprüche 1 bis 8, dadurch gekennzeichnet, dass maximal 6, insbesondere 2 Koeffizienten als Gain-Taps verwendet werden.

**10.** Verfahren nach einem der Ansprüche 1 bis 9, dadurch gekennzeichnet, dass die Gain-Taps so festgelegt werden, dass die Summe der Werte der Augenöffnungen maximal ist.

**11.** Schaltungsanordnung zur Durchführung des Verfahrens nach Anspruch 1 mit einem Feed-back Filter (2), um eine durch die Loss-Taps erzeugte Signalkomponente aus dem Empfangssignal zu eliminieren, und mit einem Log-Likelihood Equalizer, um Symbolschätzwerte auf der Basis der Gain-Taps zu ermitteln.

**12.** Schaltungsanordnung nach Anspruch 11, dadurch gekennzeichnet, dass der Log-Likelihood Equalizer als Feedforward-Filter ausgeführt ist, dessen Koeffizienten nach der Gleichung IV berechnet sind.

Fig.1

Fig.2

Fig.3

r(k)

$\Sigma$ Re $\{.\}$

$w_3$ $w_2$ $w_1$

$\Sigma$ Re $\{.\}$

$g_6$ $g_2$ $g_1$

$\hat{a}(k-2)$

15

Fig.4